# EUROPEAN PATENT APPLICATION

(11) **EP 4 822 316 A1**
(43) Date of publication of application: **14.10.2026**
(21) Application number: 26170554.5
(22) Date of filing: 02.04.2026
(51) Int. Cl.: G01L 1/20, G01L 1/14, G01L 5/22

(54) **THREE-DIMENSIONAL SOFT COMPLIANT ARRAY TACTILE SENSOR WITH MULTI-MODAL SENSING AND SCALABLE MANUFACTURING METHODS**

(30) Priority: 04.04.2025 US 202563783580 P; 11.09.2025 US 202519326524
(71) Applicant: Tesla, Inc., Austin, TX 78725 (US)
(72) Inventor: LIN, Hung Sheng, Austin, TX 78725 (US); SITARAMAN, Nitin, Austin, TX 78725 (US); XIONG, Yi Quan, Austin, TX 78725 (US); AI-RUBAIAI, Mohammed, Austin, TX 78725 (US); XU, Ruoyu, Austin, TX 78725 (US); RUPAVATHARAM, Siddharth, Austin, TX 78725 (US); EICHHORN, Jeremy, Austin, TX 78725 (US); WEI, Jessica, Austin, TX 78725 (US); HAM, Jooyeun, Austin, TX 78725 (US); LEE, Yongguo, Austin, TX 78725 (US); CHANDRA, Gaurav, Austin, TX 78725 (US); RANGASWAMAIAH, Sagar Nagsandra, Austin, TX 78725 (US)
(74) Representative: Liesegang, Eva

(57) **Abstract**

Disclosed herein are three-dimensional (3D) tactile sensors and methods for manufacturing the same. A method includes providing a first substrate material for the 3D tactile sensor, defining a set of first conductive regions for the 3D tactile sensor on the first substrate material, coupling a separator layer between the first substrate material including the set of first conductive regions and a second substrate material having a set of second conductive regions to create a stack, and forming the stack according to a target 3D structure. The substrate materials can include flexible polymers, and the conductive regions can be defined by processes such as screen printing, etching, laser-direct structuring, pad-printing, or 3D deposition. The separator layer can comprise a dielectric or piezoresistive material. The 3D tactile sensors can conform to curved geometries and can be used for measuring surface force, touch, and pressure.

## Description

### CROSS-REFERENCE TO RELATED PATENT APPLICATIONS

The present application claims priority to U.S. Provisional Application No. 63/783,580, filed April 4, 2025, which is incorporated by reference in its entirety for all purposes.

### TECHNICAL FIELD

The present disclosure relates to tactile sensing systems, specifically three-dimensional (3D) soft compliant tactile sensors capable of measuring surface force, touch, and pressure across curved geometries.

### BACKGROUND

Tactile sensors are used to detect physical interactions such as contact, force, and pressure in various environments. Achieving high spatial resolution and mechanical compliance in tactile sensing remains challenging.

Conventional rigid, two-dimensional (2D) tactile sensors lack the ability to conform to curved or irregular geometries, which can result in decreased sensitivity or unreliable detection of contact, force, or pressure in various applications. For example, as autonomous robotics systems become more prevalent, there exists a need for tactile sensors to conform to the contours or geometries of robotics equipment.

### SUMMARY

The techniques described herein provide three-dimensional (3D) tactile sensors capable of measuring surface force, touch, and pressure across curved geometries. Such sensors can be used in a variety of applications, including, but not limited to, robotics systems or automation systems. For example, the 3D tactile sensors described herein can be used in fingertips, palms, end-effectors, or other portions of a robot enabling the robot to sense the world around it. The sensors may be defined using flexible or formable material, such as thermoplastic, and can support resistive or capacitive sensing. The 3D tactile sensors described herein can be manufactured using a variety of approaches. One example approach involves defining an array of sensing elements in a substrate material using screen printing or substrate etching. Additional approaches involve the use of 3D dispensing (e.g., 3D printing) techniques, pad printing techniques, or electroplating techniques. The substrate may be formed to a target 3D geometry using thermoforming, injection molding, or compression molding, among any other suitable techniques.

At least one aspect is related to a method that can include providing a first substrate material for a three-dimensional tactile sensor. The method can include defining a set of first conductive regions for the three-dimensional tactile sensor on the first substrate material. The method can include coupling a separator layer between the first substrate material including the set of first conductive regions and a second substrate material having a set of second conductive regions to create a stack. The method can include forming the stack into a target three-dimensional structure.

In some implementations, providing the first substrate material can include selecting the first substrate material from thermoplastic polyurethane, polyethylene terephthalate, or polyimide. In some implementations, defining the set of first conductive regions can include disposing a conductive ink on a surface of the first substrate material, the conductive ink forming the set of first conductive regions. In some implementations, disposing the conductive ink can include using a screen-printing process and a stencil defining a pattern of traces for the three-dimensional tactile sensor.

In some implementations, defining the set of first conductive regions can include etching a channel in the first substrate material corresponding to a pattern of traces for the three-dimensional tactile sensor and providing a conductive material in the channel. In some implementations, etching the channel can include cutting a portion of the first substrate material using a laser. In some implementations, the method can further include providing a cover layer over the conductive material, the cover layer exposing at least a portion of the conductive material. In some implementations, the method can further include coupling a flexible printed circuit board to at least a portion of the set of first conductive regions. In some implementations, forming the stack into a target three-dimensional structure can include thermoforming the stack using a mold for the target three-dimensional structure.

At least one other aspect relates to a method that can be performed, for example, by one or more processors coupled to non-transitory memory. The method can include forming a first substrate material according to a target three-dimensional structure for a three-dimensional tactile sensor. The method can include defining a set of first conductive regions for the three-dimensional tactile sensor on the first substrate material. The method can include providing a separator material over at least a portion of the set of first conductive regions. The method can include coupling a second substrate material having a set of second conductive regions to the separator material, the second substrate material conforming to a three-dimensional structure of the first substrate material.

In some implementations, forming the first substrate material according to the target three-dimensional structure can include thermoforming a layer of the first substrate material using a mold corresponding to the target three-dimensional structure of the three-dimensional tactile sensor. In some implementations, defining the set of first conductive regions can include depositing one or more conductive traces on a surface of the first substrate material using a three-dimensional dispensing process. In some implementations, defining the set of first conductive regions can include defining one or more activated regions on a surface of the first substrate material and plating the one or more activated regions with a conductive material.

In some implementations, defining the one or more activated regions can include using a laser according to a pattern of traces for the three-dimensional tactile sensor. In some implementations, defining the set of first conductive regions can include providing one or more conductive traces on a surface of the first substrate material using a pad printing process. In some implementations, providing the separator material can include depositing the separator material on the portion of the set of first conductive regions using a three-dimensional dispensing process. In some implementations, providing the separator material can include coupling a layer of dielectric material to the first substrate material to cover the set of first conductive regions. In some implementations, the method can further include mounting one of the first substrate material or the second substrate material to a backing material.

At least one aspect relates to a three-dimensional tactile sensor that can include a stack comprising a first layer of substrate material having a set of first conductive regions, a separator material coupled to the first layer of substrate material, and a second layer of substrate material having a set of second conductive regions isolated from the set of first conductive regions by the separator material. The stack is thermoformed to conform to a target three-dimensional structure.

In some implementations, the separator material comprises one of a dielectric material or a piezoresistive material.

These and other aspects and implementations are discussed in detail below. The foregoing information and the following detailed description include illustrative examples of various aspects and implementations and provide an overview or framework for understanding the nature and character of the claimed aspects and implementations. The drawings provide illustration and a further understanding of the various aspects and implementations and are incorporated in and constitute a part of this specification. Aspects can be combined, and it will be readily appreciated that features described in the context of one aspect of the invention can be combined with other aspects. As used in the specification and in the claims, the singular form of "a," "an," and "the" include plural referents unless the context clearly dictates otherwise.

### BRIEF DESCRIPTION OF THE DRAWINGS

Non-limiting embodiments of the present disclosure are described by way of example concerning the accompanying figures, which are schematic and are not intended to be drawn to scale. Unless indicated as representing the background art, the figures represent aspects of the disclosure.
**FIG. 1** is a diagram showing robotic hand equipped with 3D soft compliant array tactile sensor, according to an embodiment.
**FIG. 2** shows a perspective view of a 3D tactile sensor mounted on a backing material, according to an embodiment.
**FIG. 3** shows a flow chart of a method for fabricating a 3D tactile sensor by creating a layer stack and applying a thermoforming process thereto, according to an embodiment.
**FIGS. 4A, 4B,** and **4C** show diagrams of a 3D screen-printing process for defining conductive ink on substrate material used to create the 3D tactile sensors described herein, according to an embodiment.
**FIG. 4D** shows a top view of a substrate with screen-printed conductive regions for a 3D tactile sensor formed using the techniques shown in **FIGS. 4A, 4B,** and **4C****,** according to an embodiment.
**FIG. 4E** shows a cross-sectional view of a layer stack including the substrate material and conductive regions of **FIG. 4D** coupled to a separator material, according to an embodiment.
**FIGS. 5A, 5B, 5C****,** **5D,** and **5E** show diagrams of an example process for forming a layer stack using an etching process, according to an embodiment.
**FIG. 6** shows a diagram of a thermoforming process for shaping a layer stack formed according to the techniques described herein, according to an embodiment.
**FIG. 7** shows a cross-sectional view of a 3D tactile sensor following the thermoforming process of **FIG. 6**, according to an embodiment.
**FIG. 8** shows a flow chart of a method for manufacturing a 3D tactile sensor by forming a conformal base substrate and depositing conductive traces and separator material thereon, according to an embodiment.
**FIG. 9** shows a diagram of a 3D dispensing process for forming conductive traces on a formed substrate material, according to an embodiment.
**FIGS. 10A** and **10B** show diagrams of a process for defining conductive regions on a formed substrate material using a laser, according to an embodiment.
**FIGS. 11A** and **11B** show diagrams of a process for defining conductive regions on a formed substrate material using a pad printing process, according to an embodiment.
**FIG. 12A** shows a diagram showing a 3D dispensing process for forming separator material on conductive regions defined on a substrate material, according to an embodiment.
**FIG. 12B** shows a diagram of a 3D tactile sensor formed after deposition of the separator material as shown in **FIG. 12A****,** according to an embodiment.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. Other embodiments may be used and/or other changes may be made without departing from the spirit or scope of the present disclosure. The illustrative embodiments described in the detailed description are not meant to be limiting to the subject matter presented.

Tactile sensing systems, such as robotics systems, may use force or pressure sensors to measure contact with a physical environment. For example, tactile sensing can be used in robotic end-effectors, wearable devices, or other surfaces of automated systems that interact with physical objects or environments. Existing tactile sensors are limited to two-dimensional (2D), flat configurations that do not mechanically comply with 3D geometries. Such rigid, 2D sensors therefore cannot be used in a variety of robotics applications, including those that require sensors on end-effectors, robotic hands, or other curved surfaces. Existing soft tactile sensors lack mechanical stability, making them unsuitable for many applications.

The techniques described herein can be used to manufacture 3D tactile sensors that are not limited to rigid, 2D geometries while providing mechanical stability suitable for robotics or automation systems. Tactile sensors manufactured using such techniques can include both resistive and capacitive sensors. To manufacture such sensors, a flexible array of conductive regions can be defined in a formable substrate material. The conductive regions may be defined using any suitable technique, including but not limited to screen printing, deposition of conductive paste, laser-direct structuring, or pad printing. The formable substrate material can be coupled to a separator material, which may include a dielectric material for capacitive sensors or a piezoresistive material for resistive sensors. The separator material may separate complementary layers of substrate material that are each defined according to target capabilities and area of the sensors.

The 3D tactile sensors may be defined as capacitive or resistive sensors. Capacitive sensors can include conductive regions disposed on substrate layers separated by a dielectric separator material. The substrate and dielectric separator material may be flexible or pliable, such that in response to an applied force, the dielectric separator material can compress and decrease the distance between the conductive regions on the substrate layers. The change in distance results in a change in capacitance. Resistive sensors operate similarly using a piezoresistive separator material. The piezoresistive separator material can change in resistance in response to mechanical deformation. In response to an applied force, the piezoresistive separator material can deform such that the electrical resistance between the conductive regions on the substrate layers decrease. The change in resistance or capacitance can be detected by readout circuitry electrically coupled to the conductive regions of the sensor.

Thermoforming may be used to conform the layers of substrate material and separator material to a target 3D geometry. The target 3D geometry may be a desired shape or contour of a robotics or automation system. For example, the layer stack making up the tactile sensor may be formed according to a 3D geometry of a palm, finger, or end-effector of a robot. The layer stack making up the 3D sensor may be formed to conform to an outer layer of a robotic housing, for example, to operate as a tactile "skin" for a humanoid robot. Any suitable technique may be used to form the sensors described herein to any suitable geometry for any application involving tactile sensors.

In some implementations, the 3D tactile sensors described herein may be formed into a target 3D geometry prior to defining conductive regions to substrate material. For example, a layer of substrate material can first be thermoformed, molded, or otherwise defined to conform to a target 3D geometry for the tactile sensor. Plating (e.g., electroplating) or deposition techniques can be used to define conductive regions for the sensors on the surface of the formed substrate material. A separator material, which may include a dielectric material or a piezoresistive material, can then be defined (e.g., as a layer, via deposition, etc.) on the conductive regions. Another layer of the substrate material, which can have a corresponding set of conductive regions, can be coupled to or defined on the separator material to form the sensor. The additional layer of substrate material may be formed or deposited according to any of the techniques described herein.

The sensors described herein can be manufactured to include connectors that couple to the conductive regions formed on the layers of substrate material, to connect the sensors to suitable circuitry that detects changes in electrical characteristics of the sensor to detect contact, pressure, or forces applied to the sensor. Such connectors can include zero insertion force (ZIF) connectors, anisotropic conductive film coupled to the sensors, or solder coupling the sensors to a flexible printed circuit board (PCB). In some implementations, the connectors can be coupled to one or more conductive regions using a lamination process or may be formed in part during definition of the conductive regions on the substrate material.

The 3D tactile sensors manufactured according to the techniques described herein can be mounted to a backing material. In some implementations, the 3D tactile sensors can be mounted on a hard substrate, such as a plastic or metal base. In some implementations, the 3D tactile sensors can be mounted on a soft substrate, such as a foam, thermoplastic elastomer, or silicone material, by over-molding or adhesive bonding such that the 3D tactile sensors maintain mechanical compliance. One or more protective layers can be applied over the 3D tactile sensors after mounting on the backing material. The protective layers can be flexible or compliant material such as foam, and can shield the sensors from environmental factors, mechanical wear, or impacts.

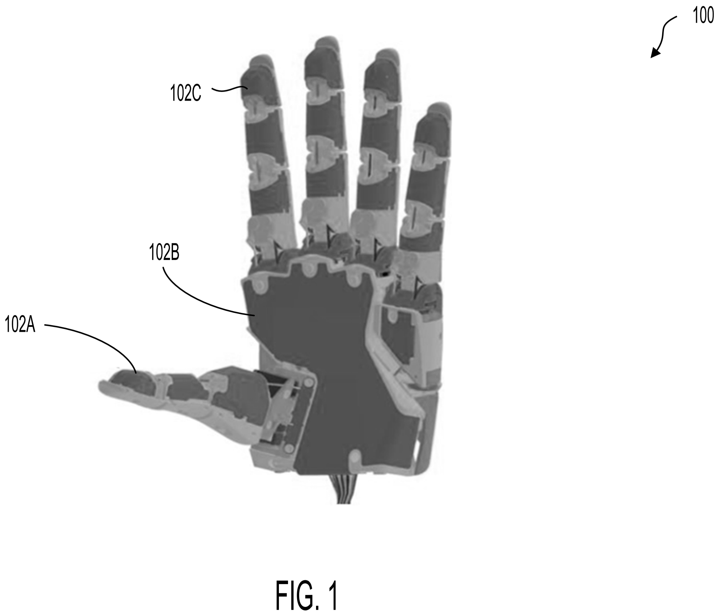

Referring to **FIG. 1****,** illustrated is a diagram showing a robotic hand **100** including a set of 3D tactile sensors **102A**, **102B**, and 102C (sometimes generally referred to as the "3D tactile sensor(s) 102"), in accordance with one or more implementations. In this example, the first tactile sensor **102A** is positioned along the thumb region of the robotic hand **100.** The first tactile sensor **102A** conforms to the geometry of the thumb, as shown. The second tactile sensor **102B** is disposed on the palm region of the robotic hand **100.** The second tactile sensor **102B** can be arranged to cover a substantial portion of the palm surface such that tactile interactions occurring across the palm can be detected.

The 3D third tactile sensor **102C** is shown as positioned on the index finger of the robotic hand **100.** Additional sensors, similar to the 3D tactile sensors **102,** can be positioned on any part of the robotic hand **100.** Although this example is shown as providing 3D tactile sensors **102** on a robotic hand **100**, it should be understood that the various sensors described herein may be provided on any type of surface for any suitable application. The 3D tactile sensors **102** may include one or more connectors, contacts, or connections to circuitry used to monitor the electric characteristics (e.g., capacitance, resistance, etc.) of the circuit. Each of the 3D tactile sensors **102** may include any number of "pixels" or regions that can independently detect physical contact.

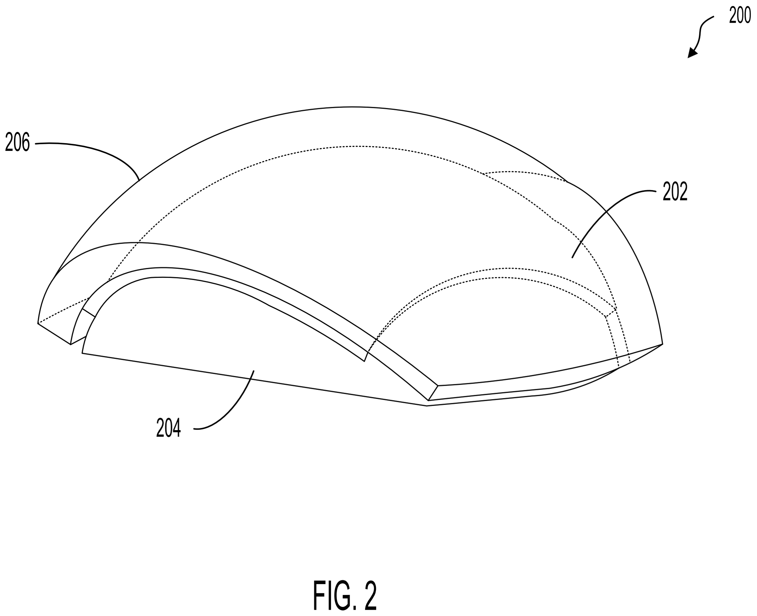

In some implementations, the 3D tactile sensors **102** can be integrated into a flexible "skin" layer that covers a robot, an autonomous vehicle, or any other type of system that operates in an environment to detect physical contact or pressure events. The 3D tactile sensors **102** can be manufactured according to the techniques described herein to occupy any suitable area while conforming to the 3D structure to which it is mounted. The 3D tactile sensors **102** may be coupled to one or more backing materials that provide structure for the 3D tactile sensors **102.** Further details of example backing materials for the 3D tactile sensors described herein are described in connection with **FIG. 2**.

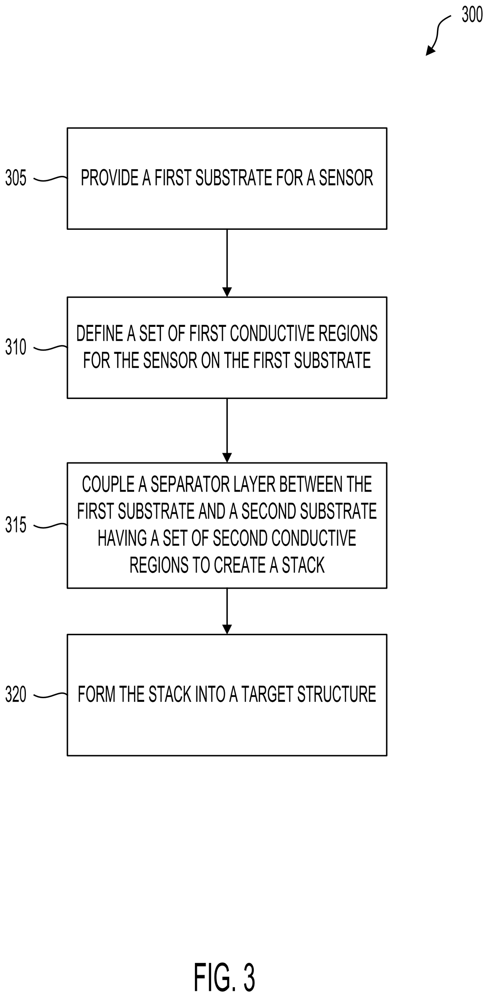

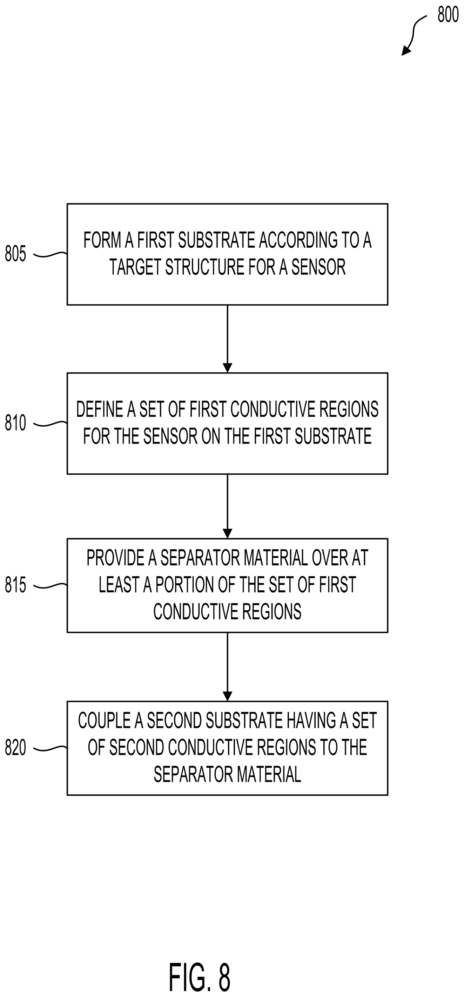

Referring to **FIG. 2**, illustrated is a perspective view **200** of an example 3D tactile sensor **202** mounted on a backing material **204,** in accordance with one or more implementations. The 3D tactile sensor **202** may be manufactured using any of the techniques described herein, including the techniques described in connection with the method **300** of **FIG. 3** and the method **800** of **FIG. 8**. The 3D tactile sensor **202** may be similar to, and include any of the structure or implement any of the functionality of, the 3D tactile sensors **102A**, **102B**, or **102C** of **FIG. 1**. The 3D tactile sensor **202** may be or include one or more capacitive sensors or resistive sensors.

As shown, the 3D tactile sensor **202** has a curved shape that conforms to the geometry of the backing material **204.** In some implementations, the 3D tactile sensor **202** can be coupled to the backing material **204** by adhesive bonding, overmolding, or mechanical fastening, among other approaches. For example, the 3D tactile sensor **202** can be coupled to the backing material **204** using a layer of a suitable adhesive. In another example, the 3D tactile sensor **202** can be positioned on the backing material **204** and overmolded (e.g., using thermoforming or similar approaches) to conform and bind the 3D tactile sensor **202** to the backing material **204.** In some implementations, the 3D tactile sensor **202** can be attached to the backing material **204** by mechanical fasteners.

The backing material **204** can include materials selected based on the desired mechanical properties or application requirements. In some implementations, the backing material **204** can be formed from hard materials such as rigid plastic or metal. In some implementations, the backing material **204** can be formed from soft or compliant materials such as foam, thermoplastic elastomer (TPE), or silicone, among other materials. The backing material **204** can be produced by molding, thermoforming, or machining processes when using hard materials. When using soft or compliant materials, the backing material **204** can be produced by casting, molding, or forming processes (e.g., thermoforming).

The 3D tactile sensor **202** is shown as being coupled to a protective layer **206.** The protective layer **206** can include a material such as foam, thermoplastic polyurethane (TPU), silicone, or TPE, among others. The protective layer **206** can be formed by any suitable process, including but not limited to overmolding, adhesive coupling, casting, or attachment via one or more connectors or fasteners. In some implementations, the protective layer **206** can be deposited as a conformal coating or can be laminated as a layer of material. The protective layer **206** may have a uniform thickness or a variable thickness. In some implementations, the protective layer **206** can provide a barrier to moisture, dust, mechanical abrasion, or other external factors that may influence the operation of the 3D tactile sensor **202.** The material for the protective layer **206** can be selected such that the mechanical compliance of the 3D tactile sensor **202** is maintained. In some implementations, the protective layer **206** may be patterned to expose selected regions of the 3D tactile sensor **202** for electrical interfacing or to allow direct contact with a target surface.

Referring to **FIG. 3**, illustrated is a flow chart of a method **300** for fabricating one or more 3D tactile sensors, in accordance with one or more implementations. The method **300** may be performed to create a layer stack in which layers of substrate material including conductive regions that define the sensing locations are separated by a separator material. The layer stack can then be molded or otherwise formed to conform to a target 3D geometry for the 3D tactile sensor. The method **300** may be performed to create any of the 3D tactile sensors described herein, including but not limited to the 3D tactile sensors **102A**, **102B**, and **102C** of **FIG. 1** and the 3D tactile sensor **202** of **FIG. 2**. In brief overview of the method **300,** the method **300** can include providing a first substrate for a sensor (STEP **305**), defining a set of first conductive regions for the sensor on the first substrate (STEP **310**), coupling a separator layer between the first substrate and a second substrate having a second set of conductive regions (STEP **315**), and forming the first substrate, the second substrate, and the separator layer into a target structure (STEP **320**).

The method **300,** at STEP **305,** can include providing a first substrate for a sensor. In some implementations, the first substrate can be provided as a layer that can serve as a base for defining conductive regions. The first substrate material can be selected from a group of flexible or formable materials such as TPU, polyethylene terephthalate (PET), or polyimide, among other thermoplastic materials. The first substrate can be provided in a sheet or film form, such that the surface of the first substrate can receive conductive ink, conductive paste, or other conductive materials in subsequent processing steps. In some implementations, the first substrate can undergo surface treatment, such as plasma treatment or corona treatment, to modify the adhesion properties of the surface prior to the definition of conductive regions.

In some implementations, the layer or film of the first substrate material can be cut or etched to predetermined dimensions prior to defining conductive regions thereon in subsequent steps. For example, the first substrate material may be subjected to mechanical cutting, die cutting, chemical etching, or laser cutting, among other cutting approaches. The predetermined dimensions can be determined according to the target 3D geometry for the 3D tactile sensor. The layer or film of the first substrate material may be cut into a shape corresponding to the 3D structure to which it will conform. In some implementations, the first substrate may be cut or otherwise modified to include alignment holes, channels, or notches, among others, to facilitate subsequent assembly steps or attachment or mounting to other substrates, components, or structures.

The method **300,** at STEP **310** can include defining a set of first conductive regions for the sensor on the first substrate. The set of first conductive regions can include traces or patterned features that define sensing regions for the 3D tactile sensor. In subsequent steps of the method **300,** the conductive regions defined on the first substrate can be aligned with corresponding conductive regions on a second substrate layer, with the first and second substrate layers separated by separation material. In some implementations, the separation material may include a dielectric material and can create capacitive sensors between the conductive regions on the first and second layers of substrate material. In some implementations, the separation material may include a piezoresistive material and can create resistive sensors between the conductive regions on the first and second layers of substrate material. In some implementations, the set of first conductive regions can be defined on the first substrate using any of the techniques described in connection with STEP **810** of the method **800** of **FIG. 8**.

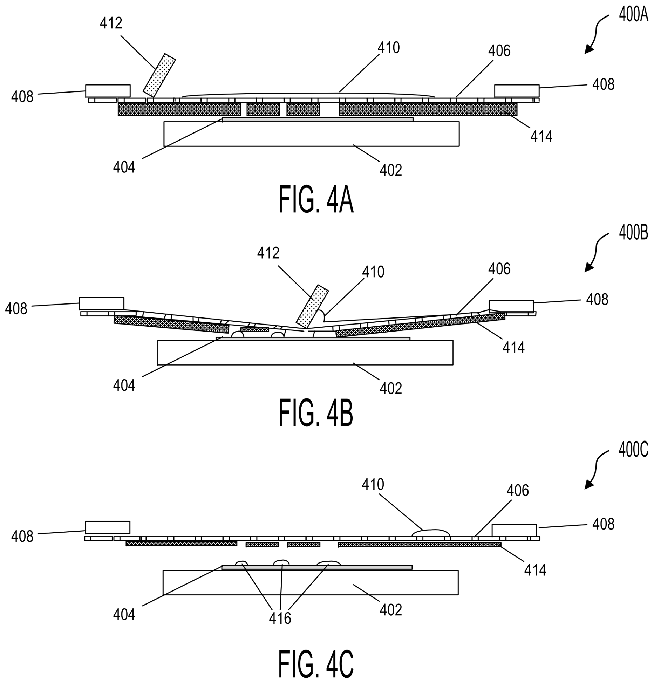

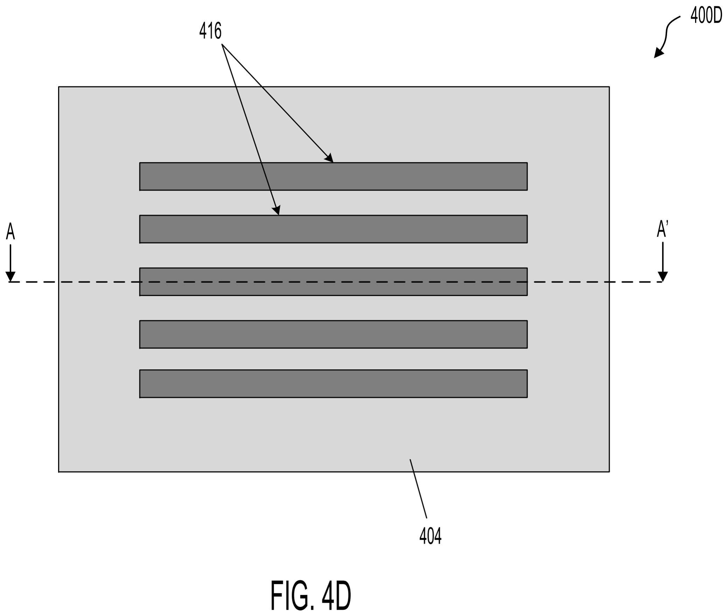

The first conductive regions can be arranged to conform to locations on the first substate material where tactile sensing is to occur. In some implementations, the first conductive regions may include traces that are to couple with one or more external circuits or connectors, such that electrical signals can be transmitted to circuitry that can detect force, touch, or pressure events based on changes in electrical properties at the sensing regions (e.g., other portions of the conductive regions). In some implementations, the set of first conductive regions can be defined by depositing a conductive ink onto the surface of the first substrate using a screen-printing process. The conductive ink may be deposited using other types of printing processes, such as 3D printing/deposition techniques. An example process for defining the conductive regions using a screen-printing process is shown in **FIGS. 4A**, **4B**, **4C**, and **4D**.

Referring to **FIGS. 4A, 4B, 4C****,** and **4D****,** illustrated are diagrams **400A, 400B, 400C,** and 400D showing an example 3D screen printing process for defining conductive ink on substrate material used to create the 3D tactile sensors described herein, in accordance with one or more implementations. In **FIG. 4A**, the diagram **400A** is shown as including a screen-printing system having a printing chuck **402,** a screen mesh **406,** screen frames **408,** at least one conductive ink **410,** a blade, and a stencil film **414.** The screen-printing process can be used to define one or more regions of conductive ink **410** on a substrate material **404.**

To perform screen-printing, a layer of substrate material **404** for the 3D tactile sensor can be positioned on a printing chuck **402** within the screen-printing system. As described herein, the substrate material **404** may include a polymer such as TPU, PET, or polyimide, among others. The substrate material **404** can be provided in a planar sheet, which may be cut or etched to a predetermined size or shape. The layer of substrate material **404** can be arranged such that the upper surface of the substrate material **404** faces the screen mesh **406.** The stencil film **414** can be positioned between the screen mesh **406** and the layer of substrate material **404.** The stencil film **414** can include a pattern of openings corresponding to the desired arrangement of conductive regions on the substrate material **404.** The stencil film **414** can include openings or apertures that define the geometry, location, or dimensions of the conductive traces and sensing elements to be formed on the substrate material **404.**

The screen-printing process can involve the deposition of one or more types of conductive ink **410.** The conductive ink **410** may be any type of ink that can conduct electricity (e.g., with a target amount of conductivity). non-limiting examples of the conductive ink **410** include silver nanoparticle ink, silver-flake-based ink, carbon-based ink, or copper-based ink, among others. In some implementations, the conductive ink **410** can be formulated to provide a target viscosity, particle size distribution, or electrical conductivity suitable for screen printing on the substrate material **404.** Initially, the conductive ink **410** can be dispensed onto the upper surface of the screen mesh **406,** such that the ink can be transferred through the patterned openings of the stencil film **414** using the blade **412.** The blade **412** can be used to spread the conductive ink **410** across the screen mesh **406,** such that the conductive ink **410** is forced through the stencil film **414** and deposited onto the substrate material **404** in a pattern defined by the stencil film **414.**

**FIG. 4B** shows the next stage of the screen-printing process, in which the blade **412** is used to force the conductive ink **410** through the patterned openings of the stencil film **414.** In some implementations, the blade **412** can be moved across the screen mesh **406** at a predetermined angle relative to the substrate material **404,** such that the conductive ink **410** is forced through the stencil pattern in a uniform manner. The blade **412** can be moved across the screen mesh **406** while maintaining a constant downward pressure, such that the conductive ink **410** is deposited onto the substrate material **404** in accordance with the geometry defined by the stencil film **414.** In some implementations, the blade **412** can be oscillated or moved in a non-linear motion to facilitate the transfer of the conductive ink **410** through the openings of the screen mesh **406** and the stencil film **414.** The blade **412** may be moved using an actuator, manual force, or a combination thereof.

In **FIG. 4C****,** diagram **400C** shows the arrangement of components of **FIGS. 4A** and **4B** following the screen-printing process for defining conductive regions **416** on the surface of the substrate material **404.** As shown, after the conductive ink **410** has been forced through the screen mesh **406,** the screen frame **408** can be lifted above and removed from the surface of the print chuck **402.** The resulting conductive regions **416** can form traces and sensing elements on the upper surface of the substrate material **404,** such that the substrate material **404** can be used in subsequent assembly steps for the fabrication of a 3D tactile sensor. Any number or pattern of conductive regions **416** can be defined on the surface of the substrate material **404.** In some implementations, the conductive regions may define connection regions for one or more connectors that are to be coupled to the substrate material **404.** An example top view of the substrate material **404** is shown in **FIG. 4D**.

In **FIG. 4D****,** the diagram **400D** shows a top view of the substrate material **404** with the conductive regions **416** disposed thereon. In this example, the conductive regions **416** are arranged as a set of elongated traces extending in parallel across the surface of the substrate material **404.** The conductive regions **416** can be positioned to correspond to sensing locations for a three-dimensional tactile sensor, such that each conductive region **416** can function as an electrode or sensing element. In some implementations, the arrangement of the conductive regions **416** can be determined according to a target spatial resolution or sensing geometry for the 3D tactile sensor. Conductive regions **416** corresponding to different sensing elements or traces can be electrically isolated from one another on the surface of the substrate material **404,** such that each conductive region **416** can be monitored by external circuitry. Although parallel conductive regions **416** are shown in **FIG. 4D**, it should be understood that any number, arrangement, or pattern of conductive regions **416** may be provided on the surface of the substrate material **404.**

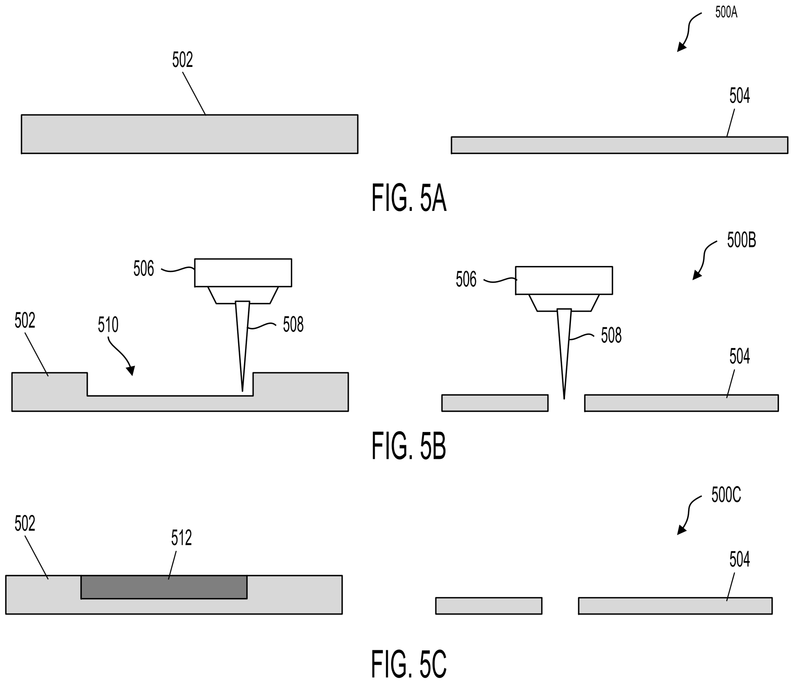

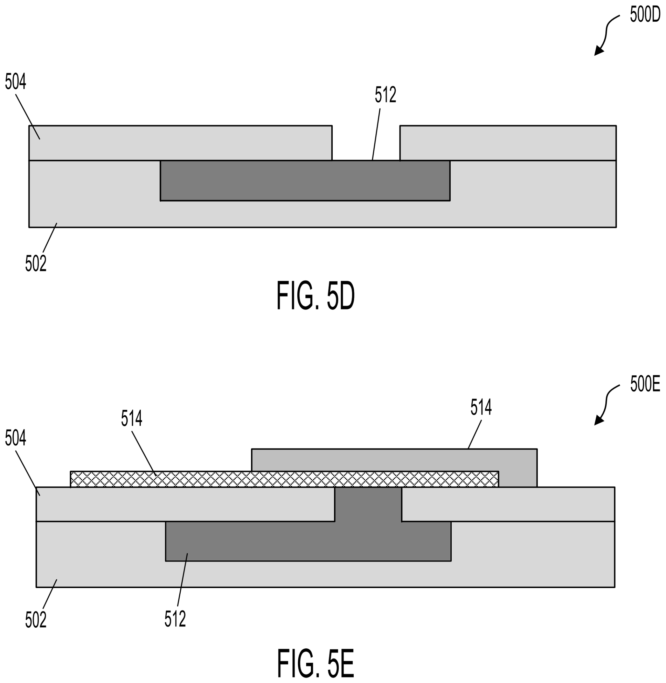

Referring back to STEP **310** of the method **300** of **FIG. 3****,** in some implementations, the set of first conductive regions can be defined by etching or cutting one or more channels into the first substrate using a laser beam or a mechanical cutting process. A conductive paste can be deposited into the channels using a suitable dispensing process. The conductive paste, which may be a silver-derived paste, can be cured or dried to form the conductive regions on the substrate material. In some implementations, channels defined in the substrate material may correspond to a desired pattern of traces or sensor regions. In some implementations, one or more portions of the substrate material may be treated to facilitate binding with the conductive paste. Connectors or exposed pads may be coupled to or formed as part of the conductive regions, to facilitate coupling to one or more external sensing circuits. An example process for defining the conductive regions using conductive paste is shown in **FIGS. 5A, 5B, 5C****,** **5D,** and **5E****.**

Referring to **FIGS. 5A, 5B, 5C****,** **5D,** and **5E****,** illustrated are diagrams **500A, 500B, 500C, 500D,** and 500E showing an example process to manufacture one or more layers of a 3D tactile sensor. In **FIG. 5A**, the diagram **500A** shows a layer of substrate material **502** and a corresponding cover layer **504.** As described herein, the substrate material **502** can include a polymer such as TPU, PET, or polyimide, among others. The substrate material **502** can be provided in a sheet or layer form and can be cut to a target shape or dimensions of the 3D tactile sensor. In some implementations, the cover layer **504** can include the same material as the substrate material **502** or can include a different compliant material (e.g., a polymer, etc.). The cover layer **504** can be cut or formed to match the dimensions or geometry of the substrate material **502,** such that the cover layer **504** can be laminated or otherwise coupled to the substrate material **502** in subsequent process steps.

**In** **FIG. 5B****,** the diagram **500B** shows the formation of channels **510** in the substrate material **502.** In some implementations, the laser device **506** can include, but is not limited to, a carbon dioxide laser, a fiber laser, or a diode-pumped solid-state laser. The laser device **506** can provide a focused laser beam **508** controlled to etch channels **510** in the substrate material **502** according to a pattern of traces for the 3D tactile sensor. The laser beam **508** can be directed according to a predetermined path specified via control instructions. The path may indicate coordinates and depth information for etching the one or more channels **510** in the substrate material **502.** In some implementations, the laser device **506** can automatically adjust the power, pulse duration, and/or scanning speed based on the thickness or type of the substrate material **502.** For example, certain substrate materials **502** may require additional cutting time or energy to form the channels **510** compared to other substrate materials **502.** A channel **510** may also be formed by cutting an opening through a sheet of substrate material **502** with the laser beam, then laminating that sheet of substrate material **502** onto a solid sheet of the same substrate material **502.**

In some implementations, other etching or cutting techniques can be used to form channels **510** in the substrate material **502.** For example, a chemical etching process can be performed by applying a patterned mask to the substrate material **502** and exposing selected regions to a chemical etchant. In some implementations, mechanical cutting processes may be performed using a blade or a rotary tool to define the channels **510.** For example, a computer numerical control (CNC) cutting machine, with a suitable number of degrees of freedom, may be used to mechanically cut one or more of the channels **510** in the substrate material **502.** The cover layer **504** can be etched or cut using similar approaches to provide one or more openings that are to expose one or more portions of the conductive regions formed in subsequent process steps. In this example, an opening in the cover layer **504** is shown as being cut using a laser device **506** with a corresponding laser beam **508.** The openings can correspond to electrical contact regions for the 3D tactile sensor.

In **FIG. 5C**, the diagram **500C** shows the deposition of conductive paste **512** (sometimes referred to as "conductive material **512"**) in the channel **510** defined in the substrate material **502.** In some implementations, the substrate material **502** can undergo a surface treatment process following the creation of the channels **510** and prior to the deposition of the conductive paste **512.** The surface treatment can include plasma treatment, corona discharge, or chemical priming, among others, such that substrate material **502** is modified to improve adhesion prior to deposition of the conductive paste **512.** In some implementations, the substrate material **502** can be heated or exposed to ultraviolet light to further modify the surface energy of the channel **510.** The type of surface treatment used, if any, can depend on the type of substrate material **502** used to create the 3D tactile sensor.

The conductive paste **512** can include any type of conductive material that can be spread or otherwise provided within the channel **510.** Non-limiting examples of conductive paste **512** can include a Gallium-Indium alloy, a silver nanoparticle dispersion, a carbon-based paste, or a copper-based paste, among others. The conductive paste **512** can be deposited into and spread through the channel **510** using a nozzle dispensing system, a jetting system, or a blade/squeegee. For example, the nozzle dispensing system can provide a controlled volume of the conductive paste **512** into the channel **510** according to a predetermined path. A nozzle dispensing system may include a 3D printer or similar device that can dispense material at specified locations. In another example, a jetting system can deposit droplets of the conductive paste **512** in a pattern that conforms to the geometry of the channel **510.** Similarly, a squeegee can be used to force the conductive paste **512** into the channel **510** by applying pressure along the length of the channel **510,** using techniques similar to those described in connection with **FIG. 4B****.** The conductive paste **512** can then dry or be cured using a suitable curing process to define conductive regions on the surface of the substrate material **502.**

**In** **FIG. 5D****,** the diagram **500D** shows the cover layer **504** being aligned over the surface of the substrate material **502.** In some implementations, the cover layer **504** can be laminated onto the substrate material **502** using a process such as adhesive bonding or pressure lamination. The cover layer **504** can be positioned such that the one or more openings etched/cut through the cover layer **504** are aligned portions of the conductive material **512** disposed within the substrate material **502** that are to be exposed. The lamination process can be performed under controlled temperature and pressure conditions to provide that the cover layer **504** adheres to the substrate material **502** without displacing the conductive material **512.** The cover layer **504** may be aligned with the top surface of the substrate material **502** using one or more mounting brackets or jigs.

In some implementations, additional conductive material **512** can be dispensed into the opening of the cover layer **504** prior to or following the lamination process. The additional conductive material **512** can be deposited to fill the exposed region and provide electrical continuity between the underlying conductive channel and any external components that may be coupled to the cover layer **504** in subsequent process steps. The deposition of the additional conductive material **512** can be performed using any dispensing process described herein. In some implementations, the surface of the additional conductive material **512** may be treated following curing to facilitate bonding to other components in subsequent process steps.

In **FIG. 5E****,** the diagram **500E** shows a flexible PCB being coupled to the surface of the cover layer **504** in contact with the exposed portion of the conductive paste **512.** The flexible PCB **514** may include exposed traces or pads that are aligned with the exposed portion of the conductive material **512.** The exposed traces or pads can be in electrical contact with the conductive material **512.** The flexible PCB **514** can be positioned over the cover layer **504** and can be coupled to the cover layer **504** using an adhesive, a lamination process, or a mechanical fastener, among others. In some implementations, an additional substrate layer **516** can be provided above the flexible PCB **514** to encapsulate or protect at least a portion of the flexible PCB **514** and the substrate material **502,** as shown.

In some implementations, the exposed traces on the flexible PCB **514** can be aligned with the exposed portion of the conductive material **512** based on the geometry of the openings in the cover layer **504** and the layout of the conductive material **512** within the substrate material **502.** The alignment can be performed using an optical registration system or mechanical alignment brackets/jigs. The flexible PCB **514** can be electrically coupled to external circuitry can monitor or detect changes in the conductivity or capacitance of the conductive material **512** within the 3D tactile sensor. In some implementations, the flexible PCB **514** may include one or more connectors that can couple to electric wires or cables connected to additional control circuitry for the 3D tactile sensor.

Referring back to **FIG. 3**, the method **300**, at STEP **315**, can include coupling a separator layer between the first substrate and a second substrate having a second set of conductive regions. In some implementations, STEPS **305** and **310** of the method **300** can be repeated to define conductive regions on two layers of substrate material. The second substrate can be similar to the first substrate and may be formed according to any of the techniques described herein. In some implementations, the first and second layers of substrate (with corresponding conductive regions) may be formed using different techniques (e.g., screen-printing, conductive paste deposition, etc.). The first substrate and the second substrate can be aligned such that the conductive regions on each substrate layer are positioned to form sensing elements when separated by the separator layer. The sensing elements (e.g., pixels) can be portions of the conductive regions of the substrate layers that overlap one another.

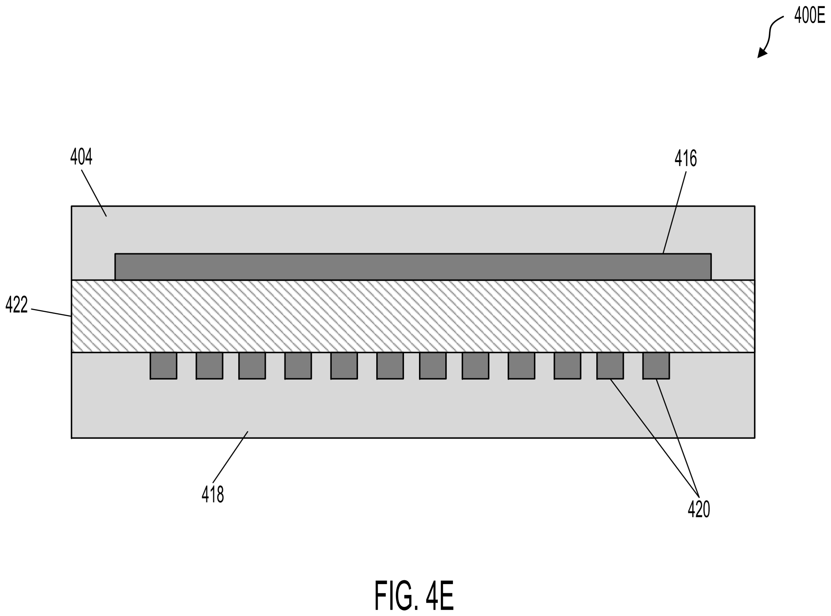

In some implementations, the separator layer can include a dielectric material when the tactile sensor is to operate in a capacitive sensing mode. The dielectric material can be any type of compliant dielectric that provides electrical insulation between the conductive regions of the substrate layers. In implementations where the 3D tactile sensor is a resistive sensor, the separator layer can include a piezoresistive material. The piezoresistive material can include, but is not limited to, compliant materials such as carbon-loaded silicone, conductive elastomers, or conductive foams. The resistance of the piezoresistive material can vary in response to applied force. The separator layer can be coupled between the first substrate and the second substrate by adhesive bonding, lamination, or thermal bonding, or any other bonding technique, to form a layer stack. An example representation of such a layer stack is described in connection with **FIG. 4E**.

Referring to **FIG. 4E**, illustrated is a cross-sectional view **400E** of a 3D tactile sensor, from the perspective of the line segment AA' shown in **FIG. 4D**. In this example, the top substrate material **404** can be the substrate constructed according to the techniques described in connection with **FIGS. 4A-4E**. The conductive regions **416** can be disposed on a surface of the substrate material **404** and can define sensing electrodes and/or traces for the 3D tactile sensor. The separator material **422** is shown as being positioned between the substrate material **404** and a bottom substrate material **418.** The separator material **422** can include a dielectric material or a piezoresistive material, as described herein. The thickness of the separator material **422** (e.g., distance between the top substrate material **404** and bottom substrate material **418**) can be selected to achieve a target baseline capacitance or baseline resistance in the 3D tactile sensor.

The bottom substrate material **418** can be constructed using techniques similar to those used to construct the top substrate material **404.** The bottom substrate material **418** is shown as including one or more bottom conductive regions **420** that can be arranged to correspond to the conductive regions **416** on the substrate material **404.** Although the top conductive regions **416** and the bottom conductive regions **420** are shown as being in contact with the separator material **422,** in some implementations, the top conductive regions **416** and the bottom conductive regions **420** can be defined within the top and bottom substrate materials **404** and **418,** respectively, and not necessarily in contact with the separator material **422.** In some implementations, the separator material **422** can electrically isolate the conductive regions **416** from the bottom conductive regions **420.** The stack formed by the substrate material **404,** the conductive regions **416,** the separator material **422**, the bottom substrate material **418**, and the bottom conductive regions **420** can be formed to conform to a target 3D geometry, as described in further detail herein.

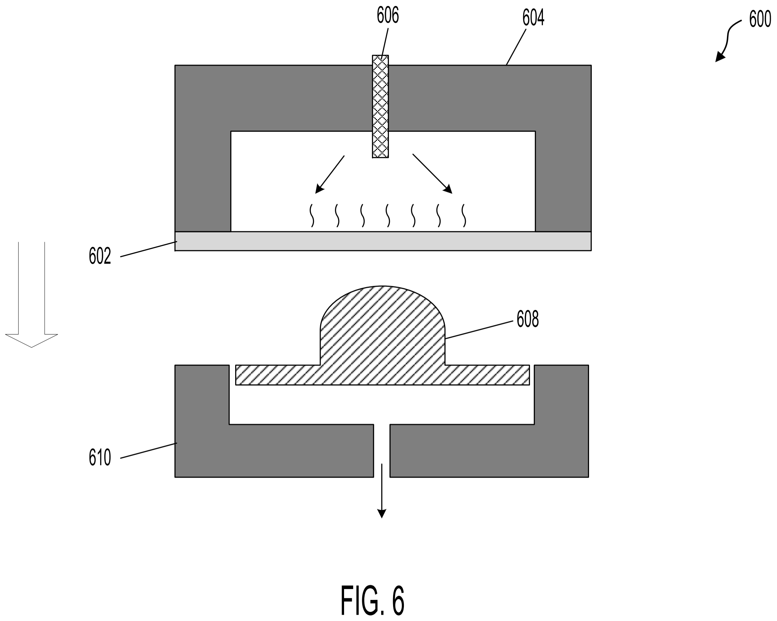

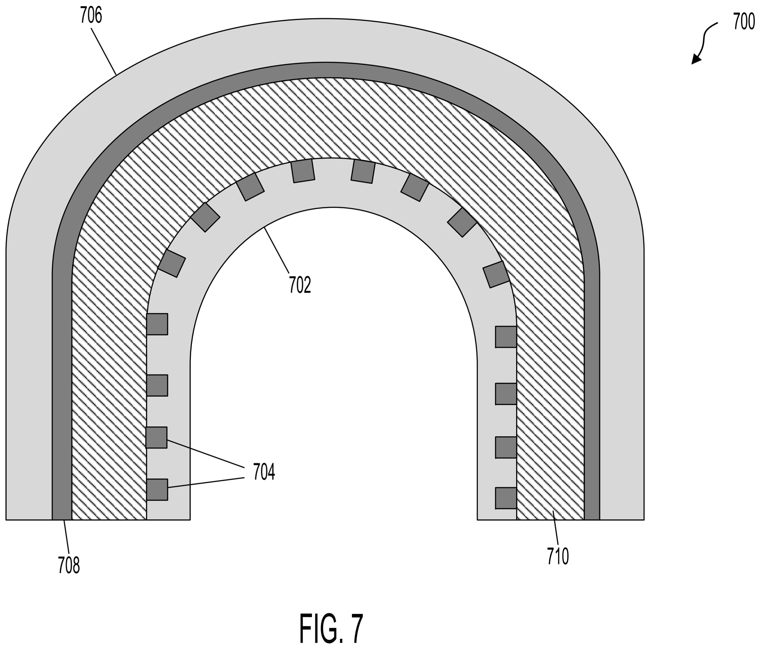

Referring back to **FIG. 3**, the method **300**, at STEP **320**, can include forming the stack of the first substrate, the second substrate, and the separator layer can be formed into a target structure. In one example, the stack can be formed to a target 3D geometry by applying a thermoforming process, in which the stack can be heated to a temperature above the glass transition temperature of the substrate materials and pressed into a mold that defines the target 3D shape. In another example, the stack can be formed by compression molding, in which the stack can be placed between two mold surfaces and subjected to pressure and heat such that the stack conforms to the contours of the mold. In yet another example, the stack can be formed by vacuum forming, in which the stack can be heated and drawn against a mold surface by application of vacuum pressure such that the stack conforms to the mold geometry. An example representation of a thermoforming process is shown in **FIG. 6**. The 3D tactile sensor resulting from the example thermoforming process is shown in **FIG. 7****.**

Referring to **FIG. 6****,** illustrated is a diagram of a thermoforming system **600** for shaping a 3D compliant tactile sensor. The thermoforming system **600** can include a heater housing **604,** a heat source **606,** a sensor mold **608,** or a mold base **610.** As shown, a layer stack **602** (for example, the material stack shown in **FIG. 4E**) can be coupled to the heater housing **604** and can be subjected to heat generated by the heat source **606.** The sensor mold **608** is positioned within the mold base **610** such that the sensor mold **608** defines a surface contour corresponding to the target 3D geometry for the layer stack **602.** The mold base **610** can be coupled to the sensor mold **608** such that the sensor mold **608** is fixed in place. As shown, openings may be provided in one or more portions of the sensor mold **608** or the mold base **610** to facilitate the thermoforming process.

To thermoform the layer stack **602,** heat from the heat source **606** can be applied and to the layer stack **602.** In some implementations, the heat source **606** may provide positive air pressure at the top side of the layer stack **602** to facilitate the thermoforming process. The heater housing **604** can be lowered, or the mold base can be raised, to press the heated layer stack **602** against the sensor mold **608.** The layer stack **602** can be heated to a glass transition temperature, such that the layer stack **602** conforms to the geometry of the sensor mold **608.** The heat source **606** can be deactivated and the layer stack **602** can be allowed to cool on the sensor mold **608.** The formed layer stack **602** can then be removed from the sensor mold **608.** Once cooled below a threshold temperature, the resulting formed layer stack **602** can retain the 3D shape defined by the sensor mold **608,** which corresponds to the target 3D structure for the 3D tactile sensor. A 3D tactile sensor formed using the techniques described herein is shown in **FIG. 7**.

Referring to **FIG. 7**, illustrated is a cross-sectional view of an example 3D tactile sensor **700.** The 3D tactile sensor **700** can be a formed layer stack similar to the stack of layers shown in **FIG. 4E**, following a thermoforming process. The 3D tactile sensor **700** includes a lower substrate material **702,** lower conductive regions **704,** an upper substrate material **706,** upper conductive regions **708,** and a separator material **710.** In this example, 3D tactile sensor **700** has been formed into a curved structure. Following thermoforming, the arrangement of the lower conductive regions **704** and the upper conductive regions **708** defined in the lower substrate material **702** and the upper substrate material **706** are maintained across from one another, separated by the separator material **710.** This enables the 3D tactile sensor to operate after forming to a target 3D geometry.

In some implementations, the 3D tactile sensor **700** can be cut or etched to a target shape following the thermoforming process. For example, the 3D tactile sensor **700** can be trimmed using a mechanical cutting tool, a die-cutting apparatus, or a laser cutting system to define an outer profile that conforms to a target geometry. The 3D tactile sensor **700** can be mounted on a backing material (e.g., the backing material **204** of **FIG. 2**) following the cutting or etching operation. The mounting process can include adhesive bonding, overmolding, or mechanical fastening to secure the 3D tactile sensor to a hard or soft backing, as described in connection with **FIG. 2**. In some implementations, one or more layers of protective material (e.g., the protective layer **206**) can be provided over the 3D tactile sensor **700.**

Referring to **FIG. 8**, illustrated is a method **800** for manufacturing a 3D tactile sensor. The method **800** may be performed to create a 3D tactile sensor on a substrate that is pre-formed to a target 3D geometry. Various approaches may be used to define conductive regions on the surface of the formed substrate. The method **800** may be performed to create any of the 3D tactile sensors described herein, including but not limited to the 3D tactile sensors **102A**, **102B**, and 102C of **FIG**. **1** and the 3D tactile sensor **202** of **FIG. 2**. In brief overview of the method **800,** the method **800** can include forming a first substrate according to a target structure for a sensor (STEP **805**), defining first conductive regions for the sensor on the first substrate (STEP **810**), providing a separator material over at least a portion of the first conductive regions (STEP **815**), and coupling a second substrate having second conductive regions to the separator material (STEP **820**).

The method **800**, at STEP **805**, can include forming a first substrate according to a target structure for a sensor. The first substrate can be selected using approaches similar to those described for STEP **305** of the method **300** of **FIG. 3**, in which a flexible or formable substrate material can be provided in a sheet or film form. In one example, the first substrate can be formed to a target 3D structure for the 3D tactile sensor by subjecting the substrate material to a thermoforming process. The thermoforming process can include heating the substrate material to a temperature above the glass transition temperature and pressing the substrate material into a mold that defines the target 3D geometry. The substrate material can be cooled such that the substrate retains the formed shape. In some implementations, the first substrate can be formed to the target 3D structure by using a molding process such as injection molding or compression molding. In another example implementation, the first substrate can be formed by casting a liquid precursor of the substrate material into a mold and curing the material to achieve the desired geometry. Mechanical formation techniques may also be used to form the substrate material. For example, the first substrate can be formed by machining or cutting a bulk material to the target 3D shape.

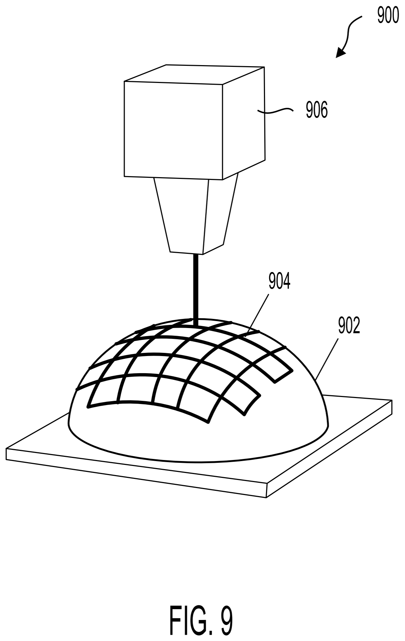

The method **800,** at STEP **810,** can include defining the set of first conductive regions for the sensor on the first substrate. As described herein, the first conductive regions can include patterned traces or electrodes that can function as sensing elements for the 3D tactile sensor. The first conductive regions can be used to detect changes in electrical properties (e.g., resistance or capacitance) of the 3D tactile sensor in response to contact, force, or pressure applied to the 3D tactile sensor. In some implementations, the set of first conductive regions can be defined on the first substrate using any of the techniques described in connection with STEP **310** of the method **300** of **FIG. 3****.** In one example, the first conductive regions can be defined by depositing a conductive material onto the surface of the formed substrate using a 3D dispensing technique. The 3D dispensing technique can include dispensing a conductive ink or paste along a predetermined pattern on a curved surface of the substrate. An example diagram showing a 3D dispensing for forming conductive regions is shown in **FIG. 9****.**

Referring to **FIG. 9****,** illustrated is a diagram **900** showing a 3D dispensing process for forming conductive traces on a formed substrate material, in accordance with one or more implementations. The diagram **900** shows a dispensing head **906** forming a set of conductive regions **904** on formed substrate material **902.** The dispensing head **906** can include any type of dispensing device. For example, the dispensing head **906** may include a nozzle-based dispenser or a syringe pump. In some implementations, the dispensing head **906** may be part of a CNC system or gantry system (e.g., a 3D printer) that can operate according to control signals specifying a dispensing path and dispensing rate. The conductive regions **904** can be formed using a conductive ink or paste, such as a silver nanoparticle ink, a silver-flake-based ink, a carbon-based ink, or a Gallium-Indium alloy paste, among others.

The conductive ink or paste can be dispensed in a liquid or semi-liquid state and can undergo a curing or sintering process after deposition on the formed substrate material **902.** In some implementations, the dispensing head **906** can move relative to the formed substrate material **902** based on a predetermined pattern, such that the conductive regions **904** are deposited in a specified arrangement on the surface of the formed substrate material **902.** In some implementations, the predetermined pattern can correspond to a grid, an array, or any suitable electrode layout for a tactile sensor array. The dispensing process can be repeated for multiple regions of the formed substrate material **902** to create multiple isolated conductive regions **904** corresponding to different traces or sensing elements.

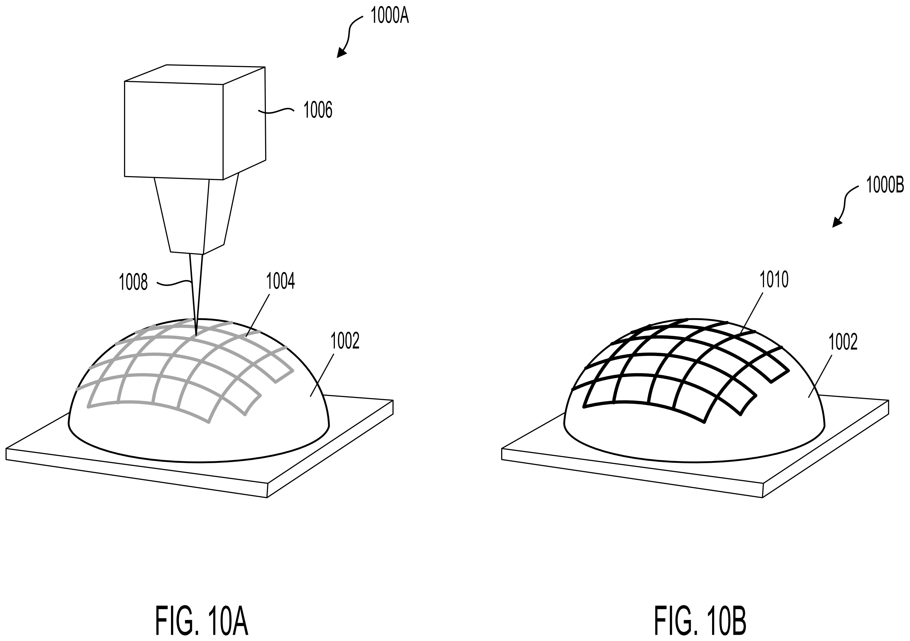

Referring back to STEP **810** of the method **800** of **FIG. 8****,** in another example, the first conductive regions can be defined by activating selected regions of the substrate using a laser in a laser-direct structuring process. The laser-direct structuring process can include scanning a laser beam over the substrate to activate portions of the substrate material, followed by plating the activated regions with a conductive metal such as copper, nickel, or gold, among others. To activate portions of the substrate material, a laser can direct a laser beam along a predetermined pattern such that the substrate material is selectively activated in regions corresponding to the target conductive regions. The activated substrate can be immersed in a plating bath including a metal salt solution. An example laser-direct structuring process for forming conductive regions is shown in **FIGS. 10A** and **10B****.**

Referring to **FIGS. 10A** and **10B**, illustrated are diagrams **1000A** and **1000B** showing a laser-direct structuring process for forming conductive regions on formed substrate material **1002.** In **FIG. 10A**, the diagram **1000A** shows a laser **1006** forming one or more activated regions **1004** on a formed substrate material **1002.** The formed substrate material **1002** may include one or more additives to facilitate laser-direct structuring. For example, the substrate material **1002** may include one or more metal-organic compounds. In some implementations, surface treatment can be applied to the formed substrate material **1002** prior to laser activation. The laser **1006** can include any type of laser that can activate the additives in the substrate material **1002.** The laser **1006** can generate a laser beam **1008** having a predetermined wavelength that can be directed onto the formed substrate material **1002** to activate regions for subsequent plating. The laser beam **1008** can be scanned across the surface of the formed substrate material **1002** according to a predetermined pattern, such that the activated regions **1004** correspond to a layout of conductive traces or electrodes for a three-dimensional tactile sensor.

In **FIG. 10B**, the diagram **1000B** shows the substrate material **1002** following a plating process, in which the activated regions **1004** are plated with metal to form the conductive regions **1010.** In one example, the plating process can include immersing the activated substrate material **1002** in a metal plating bath (e.g., a copper, nickel, or gold salt solution, etc.). When the activated regions **1004** are exposed to the plating bath, metal ions are selectively deposited on the activated regions **1004.** In another example, the plating process can include electroplating, where an electrical potential can be applied between the activated substrate material **1002** and a counter electrode, such that metal ions from the plating bath can deposit on the activated regions **1004.** In some implementations, a combination of chemical plating and electroplating can be used, where an initial metal layer can be deposited chemically on the activated regions **1004,** followed by thickening of the metal layer using electroplating. The resulting conductive regions **1010** can correspond to the pattern of the activated regions **1004** on the surface of the activated substrate material **1002.**

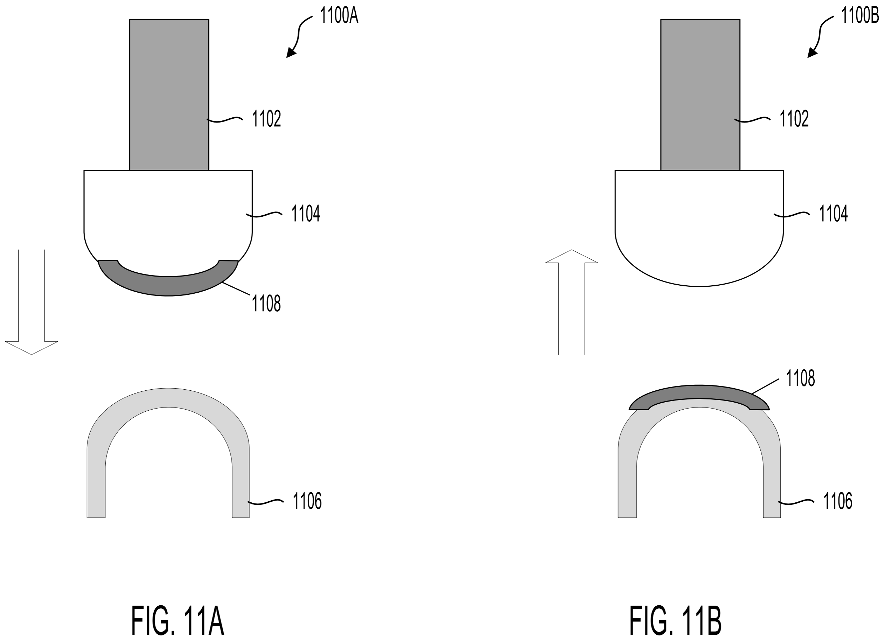

Referring back to STEP **810** of the method **800** of **FIG. 8****,** in some implementations, the first conductive regions can be defined by transferring a conductive ink or paste onto the formed substrate material using a pad printing process. The pad printing process can include transferring a patterned layer of conductive ink from an etched printing plate to the 3D surface of the substrate material using a silicone pad that can conform to the geometry of the substrate. The pad printing process can be used to apply conductive patterns to curved, concave, or irregular surfaces of the formed substrate material. The conductive ink used in the pad printing process can include silver nanoparticle ink, silver-flake-based ink, or carbon-based ink, among others. In some implementations, the pad printing process can be repeated to deposit multiple layers of conductive ink or to form different electrode patterns on the three-dimensional surface of the substrate material. An example pad printing process for forming conductive regions is shown in **FIGS. 11A** and **11B****.**

Referring to **FIGS. 11A** and **11B**, illustrated are diagrams **1100A** and **1100B** showing the definition of conductive regions on a formed substrate material **1106** using a pad printing process. In **FIG. 11A**, the diagram **1100A** shows a pad printer **1102** having a print head **1104** that can be used to apply the conductive ink **1108** on the surface of the formed substrate material **1106.** In some implementations, the conductive ink **1108** can include silver nanoparticles, silver-flake-based ink, or carbon-based ink, as described herein. In some implementations, the pad printer **1102** patterned conductive ink can be applied to the printer head **1104** via from an etched printing plate. The print head **1104** can transfer the conductive ink **1108** onto the formed substrate material **1106** such that the conductive regions conform to the 3D geometry of the substrate.

In **FIG. 11B**, the diagram **1100B** shows the formed substrate material **1106** following the transfer of the conductive ink **1108.** As shown, the conductive ink **1108** can conform to the three-dimensional geometry of the formed substrate material **1106.** In some implementations, the transfer of the conductive ink **1108** can be followed by a curing process to cause the conductive ink **1108** to adhere to the surface of the formed substrate material **1106.** The resulting structure can include conductive regions forming traces or sensing elements on the curved or irregular surface of the formed substrate material **1106.** Additional layers can be coupled to the surface of the substrate material **1106** to form a 3D tactile sensor as described in further detail herein.

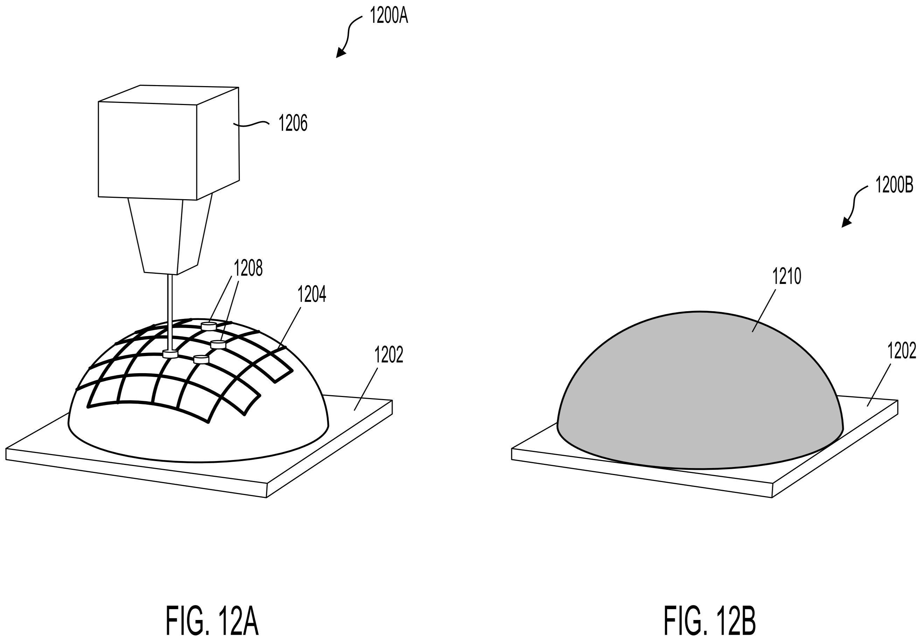

Referring back to **FIG. 8**, the method **800**, at STEP **815,** can include providing a separator material over at least a portion of the first conductive regions. The separator material can include a dielectric material for a capacitive sensor or can include a piezoresistive material when for a resistive sensor. In one example, the separator material can be defined using a 3D dispensing process. In some implementations, the separator material can be deposited as a continuous layer across the substrate material, for example, using a thermoforming process or similar molding technique. The thickness and coverage of the separator material can be controlled according to the target electrical characteristics of the 3D tactile sensor. An example process for forming separator material using a 3D dispensing technique is shown in **FIG. 12A**.

**FIG. 12A** shows a diagram **1200A** of a 3D dispensing process for forming separator material on conductive regions of a substrate material. In the diagram **1200A,** a dispensing head **1206** is shown depositing regions of separator material **1208** on the surface of the substrate material **1202** and the conductive regions **1204.** In some implementations, the dispensing head **1206** can include a nozzle-based dispenser, a syringe pump, or any other type of printing system. The dispensing head **1206** can be coupled to and positioned by a CNC system, a robotic arm, or a gantry-based positioning system. The dispensing head **1206** may receive control signals specifying a dispensing rate or a dispensing pressure to deposit the separator material **1208** in predetermined amounts. Different dispensing parameters may be used for different types of separator material **1208.**

The regions of separator material **1208** can be positioned in predetermined locations on the surface of the substrate material **1202,** and on at least a portion of the conductive regions **1204,** to define sensing elements. In some implementations, the dispensing head may be fixed in place, and the substrate material **1202** may be coupled to a gantry or other positioning system to move the substrate material **1202** to predetermined locations beneath the dispensing head **1206.** In this example, the separator material **1208** is shown as being deposited in various spots on the surface of the conductive regions. As described in further detail herein, electrodes can be defined by coupling a second substrate having other conductive regions on the opposite side of the separator material **1208.** The separator material **1208** may include a dielectric material for capacitive sensors or may include a piezoresistive material for resistive sensors. Any suitable pattern or amount of separator material **1208** may be deposited on the surface of the conductive regions **1204** and the substrate material **1202.**

In some implementations, the separator material **1208** can include an adhesive material such that the separator material **1208** can bond to the substrate material **1202.** For example, the separator material **1208** can be provided as a pressure-sensitive adhesive or a thermally activated adhesive. In some implementations, the separator material **1208** can be deposited as a film. In some implementations, an adhesive material may be first deposited on the substrate material **1202,** followed by depositing or coupling the separator material **1208** to the substrate material **1202** via the adhesive material. In another example, the separator material **1208** (e.g., in layer or sheet form) can be laminated onto the substrate material **1202.** Combinations of approaches for coupling separator material **1208** may also be used.

Referring back to **FIG. 8**, the method **800,** at STEP **820,** can include coupling a second substrate having second conductive regions to the separator material. In some implementations, the second substrate can be positioned such that the separator material is disposed between and coupled to the first substrate and the second substrate. The separator material can electrically isolate the first conductive regions defined on the first substrate from the second conductive regions defined on the second substrate. The second conductive regions can be arranged to correspond to and overlap the first conductive regions, where the overlapping conductive regions (separated by the separator material) can form sensing elements. The sensing elements can be capacitive or resistive sensor structures, as described herein. In some implementations, the separator material can be or include an adhesive material, such as a pressure-sensitive adhesive or a thermally activated adhesive, which can bond the first substrate and the second substrate while maintaining electrical isolation between the conductive regions of the first substrate and the second substrate.

The second substrate may be manufactured using techniques similar to those described in connection with STEPS **305** and **310** of the method **300** of **FIG. 3****.** For example, the second substrate can be provided as a flexible film of TPU, PET, or polyimide, with second conductive regions can be defined on the second substrate using a screen-printing process or a process involving the deposition of conductive ink in channels (e.g., described in connection with **FIGS. 5A-5E**). In some implementations, the second substrate can be formed to a target 3D structure prior to coupling to the separator material, for example, by thermoforming or compression molding. For example, techniques similar to those described in connection with STEPS **805** and **810** (e.g., a laser-direct structuring process, a pad printing process, etc.) may be used to form the second substrate material and define the second conductive regions thereon. To couple the second substrate to the separator material, the second substrate can be aligned with and adhered at least one of the separator material or the first substrate material using a suitable adhesive or bonding technique. An example showing a 3D tactile sensor formed according to such techniques is shown in **FIG. 12B****.**

Referring to **FIG. 12B****,** illustrated is a diagram **1200B** of a 3D tactile sensor formed by fixing a layer of second substrate material **1210** on the surface of the substrate material **1202.** The layer of the second substrate material **1210** can be deposited subsequent to the deposition of the separator material as shown in **FIG. 12A**. As described herein, the second substrate material **1210** can include conductive regions that correspond to the conductive regions **1204** shown in **FIG. 12A****.** The conductive regions of the second substrate material **1210** can be arranged such that the conductive regions are positioned to overlap or align with the conductive regions **1204** shown in **FIG. 12A****,** separated by separator material (e.g., the separator material **1208** of **FIG. 12A**). Any suitable approach can be used to adhere the second substrate material **1210** to the substrate material **1202,** including but not limited to adhesive bonding, thermal lamination, or mechanical fastening. In some implementations, a protective layer (e.g., foam, a dielectric material, etc.) may be mounted or coupled to the outer surface of the second substrate material **1210.**

As utilized herein with respect to numerical ranges, the terms "approximately," "about," "substantially," and similar terms generally mean +/- 10% of the disclosed values. When the terms "approximately," "about," "substantially," and similar terms are applied to a structural feature (e.g., to describe its shape, size, orientation, direction, etc.), these terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the Figures. It should be noted that the orientation of various elements may differ according to other exemplary embodiments, and that such variations are intended to be encompassed by the present disclosure.

Any implementation disclosed herein may be combined with any other implementation, and references to "an implementation," "some implementations," "an alternate implementation," "various implementation," "one implementation" or the like are not necessarily mutually exclusive and are intended to indicate that a particular feature, structure, or characteristic described in connection with the implementation may be included in at least one implementation. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, any software implementations of the described methods could be accomplished with standard programming techniques with rule-based logic and other logic to accomplish the various connection steps, processing steps, comparison steps, and decision steps.

The preceding description of the disclosed embodiments is provided to enable any person skilled in the art to make or use the embodiments described herein and variations thereof. Various modifications to these embodiments will be readily apparent to those skilled in the art, and the principles defined herein may be applied to other embodiments without departing from the spirit or scope of the subject matter disclosed herein. Thus, the present disclosure is not intended to be limited to the embodiments shown herein but is to be accorded with the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method of forming a three-dimensional (3D) tactile sensor, comprising:
providing a first substrate material for the 3D tactile sensor;
defining a set of first conductive regions for the 3D tactile sensor on the first substrate material;
coupling a separator layer between the first substrate material including the set of first conductive regions and a second substrate material having a set of second conductive regions to create a stack; and
forming the stack into a target 3D structure.

2. The method of claim 1, wherein providing the first substrate material comprises selecting the first substrate material from the group consisting of:
thermoplastic polyurethane;
polyethylene terephthalate; and
polyimide.

3. The method of claim 1 or 2, wherein defining the set of first conductive regions comprises:
disposing a conductive ink on a surface of the first substrate material, the conductive ink forming the set of first conductive regions, preferably further comprising disposing the conductive ink using a screen-printing process and a stencil defining a pattern of traces for the 3D tactile sensor.

4. The method of one of the preceding claims, wherein defining the set of first conductive regions comprises:
etching a channel in the first substrate material corresponding to a pattern of traces for the 3D tactile sensor; and
providing a conductive material in the channel.

5. The method of claim 4, wherein etching the channel comprises cutting a portion of the first substrate material using a laser, and/or further comprising:
providing a cover layer over the conductive material, the cover layer exposing at least a portion of the conductive material.

6. The method of one of the preceding claims, further comprising coupling a flexible printed circuit board (PCB) to at least a portion of the set of first conductive regions.

7. The method of one of the preceding claims, wherein forming the stack into a target 3D structure comprises thermoforming the stack using a mold for the target 3D structure.

8. A method of forming a three-dimensional (3D) tactile sensor, comprising:
forming a first substrate material according to a target 3D structure for the 3D tactile sensor;
defining a set of first conductive regions for the 3D tactile sensor on the first substrate material;
providing a separator material over at least a portion of the set of first conductive regions; and
coupling a second substrate material having a set of second conductive regions to the separator material, the second substrate material conforming to a 3D structure of the first substrate material.

9. The method of claim 8, wherein forming the first substrate material according to the target 3D structure comprises:
thermoforming a layer of the first substrate material using a mold corresponding to the target 3D structure of the 3D tactile sensor.

10. The method of claim 8 or 9, wherein defining the set of first conductive regions comprises:
depositing one or more conductive traces on a surface of the first substrate material using a 3D dispensing process.

11. The method of one of claims 8 to 10, wherein defining the set of first conductive regions comprises:
defining one or more activated regions on a surface of the first substrate material; and
plating the one or more activated regions with a conductive material, preferably further comprising defining the one or more activated regions using a laser according to a pattern of traces for the 3D tactile sensor.

12. The method of one of claims 8 to 11, wherein defining the set of first conductive regions comprises:
providing one or more conductive traces on a surface of the first substrate material using a pad printing process.

13. The method of one of claims 8 to 12, wherein providing the separator material comprises:
depositing the separator material on the portion of the set of first conductive regions using a 3D dispensing process, and/or wherein providing the separator material comprises:
coupling a layer of dielectric material to the first substrate material to cover the set of first conductive regions.

14. The method of one of claims 8 to 13, further comprising:
mounting one of the first substrate material or the second substrate material to a backing material.

15. A three-dimensional (3D) tactile sensor, comprising:
a stack comprising:
a first layer of substrate material having a set of first conductive regions,
a separator material coupled to the first layer of substrate material, and
a second layer of substrate material having a set of second conductive regions isolated from the set of first conductive regions by the separator material,
wherein the stack is thermoformed to conform to a target 3D structure, preferably wherein the separator material comprises one of a dielectric material or a piezoresistive material.
